(19) **Europäisches Patentamt / European Patent Office / Office européen des brevets**

(11) **EP 2 837 151 B1**

(12) **EUROPEAN PATENT SPECIFICATION**

(45) Date of publication and mention of the grant of the patent:
**19.06.2019 Bulletin 2019/25**

(21) Application number: **13717829.9**

(22) Date of filing: **10.04.2013**

(51) Int Cl.:
**H04L 27/26** *(2006.01)*

(86) International application number:
**PCT/GB2013/050920**

(87) International publication number:
**WO 2013/153381 (17.10.2013 Gazette 2013/42)**

(54) **A METHOD OF, AND RECEIVER FOR, DETECTING A BROADCAST OFDM SIGNAL**

VERFAHREN UND EMPFÄNGER ZUR ERKENNUNG EINES OFDM-SENDESIGNALS

PROCÉDÉ ET RÉCEPTEUR PERMETTANT DE DÉTECTER UN SIGNAL DE DIFFUSION OFDM

(84) Designated Contracting States:
**AL AT BE BG CH CY CZ DE DK EE ES FI FR GR HR HU IE IS IT LI LT LU LV MC MK MT NL NO PL PT RO RS SE SI SK SM TR**

(30) Priority: **11.04.2012 GB 201206363**

(43) Date of publication of application:
**18.02.2015 Bulletin 2015/08**

(73) Proprietor: **Frontier Silicon Limited**
**Cambridge**
**Cambridgeshire CB22 3LJ (GB)**

(72) Inventors:
• **TANG-RICHARDSON, Mel**
**Cambridge**
**Cambridgeshire CB22 3LJ (GB)**
• **EMERSON, Christopher Michael**
**Cambridge**
**Cambridgeshire CB22 3LJ (GB)**

(74) Representative: **Probert, Rhyan Wyn**
**Marks & Clerk LLP**
**62-68 Hills Road**
**Cambridge CB2 1LA (GB)**

(56) References cited:
• VINCENT LE NIR ET AL: "Implementation of an adaptive OFDMA PHY/MAC on USRP platforms for a cognitive tactical radio network", COMMUNICATIONS AND INFORMATION SYSTEMS CONFERENCE (MCC), 2012 MILITARY, IEEE, 8 October 2012 (2012-10-08), pages 1-7, XP032282098, ISBN: 978-1-4673-1422-0
• CHAUDHARI S ET AL: "Autocorrelation-Based Decentralized Sequential Detection of OFDM Signals in Cognitive Radios", IEEE TRANSACTIONS ON SIGNAL PROCESSING, IEEE SERVICE CENTER, NEW YORK, NY, US, vol. 57, no. 7, 1 July 2009 (2009-07-01), pages 2690-2700, XP011254232, ISSN: 1053-587X
• JAN-JAAP VAN DE BEEK ET AL: "ML Estimation of Time and Frequency Offset in OFDM Systems", IEEE TRANSACTIONS ON SIGNAL PROCESSING, IEEE SERVICE CENTER, NEW YORK, NY, US, vol. 45, no. 7, 1 July 1997 (1997-07-01), XP011057861, ISSN: 1053-587X
• ERIK AXELL ET AL: "Optimal and near-optimal spectrum sensing of OFDM signals in AWGN channels", COGNITIVE INFORMATION PROCESSING (CIP), 2010 2ND INTERNATIONAL WORKSHOP ON, IEEE, PISCATAWAY, NJ, USA, 14 June 2010 (2010-06-14), pages 128-133, XP031777359, ISBN: 978-1-4244-6457-9

**Description**

FIELD OF THE INVENTION

The present invention relates to a method of, and a receiver for, detecting a broadcast OFDM signal.

BACKGROUND OF THE INVENTION

Known OFDM detectors work with the paradigm of assuming a signal being received by a receiver is an OFDM signal, and attempt to derive a parameter from it. Such parameters include a time, a frequency, a sample rate, a symbol and/or a frame.

However, this can be a relatively time consuming approach when scanning for OFDM signals, as the receiver has to lock on to what it thinks is an OFDM signal before it can be determined whether or not the signal being received is an OFDM construct. Since it can take many symbols, for example up to 300ms for DAB, to lock onto an OFDM signal before a determination of what the signal is can be performed, it is clear that this can result in longer scan times. In OFDM systems such as DAB receiver, such long scan times are not acceptable.

Relevant prior art documents which regard spectrum sensing of OFDM signals based on the properties of autocorrelation coefficients are:

CHAUDHARI S ET AL: "Autocorrelation-Based Decentralized Sequential Detection of OFDM Signals in Cognitive Radios",IEEE TRANSACTIONS ON SIGNAL PROCESSING, vol. 57, no. 7, 1 July 2009, pages 2690-2700, and
ERIK AXELL ET AL: "Optimal and near-optimal spectrum sensing of OFDM signals in AWGN channels", 2ND INTERNATIONAL WORKSHOP ON COGNITIVE INFORMATION PROCESSING (CIP), 14 June 2010, pages 128-133.

SUMMARY OF THE INVENTION

We have therefore appreciated the need for an improved method of detecting broadcast OFDM signals in which the scan times are reduced.

The present invention therefore provides a method of detecting a broadcast OFDM signal and a receiver for detecting a broadcast OFDM signal. The invention is defined in the independent claims. Advantageous embodiments are set out in the dependent claims. Aspects or embodiments that do not fall under the scope of the claims are useful to understand the invention.

LIST OF FIGURES

The invention will now be described, by way of example only, and with reference to the drawings, in which:

Figure 1 shows a simplified systems diagram of an OFDM receiver, for example a DAB receiver;

Figure 2 shows an OFDM symbol.

DETAILED DESCRIPTION OF THE PREFERRED EMBODIMENTS

In brief, the present invention produces metrics that enables the determination of how likely a received signal is to be an OFDM signal, and how likely it is not to be an OFDM signal. During a scanning operation these metrics allow a receiver to make a quick assessment on whether to scan or skip over a frequency.

In essence, this method does not assume the signal is an OFDM signal, but checks how likely or how unlikely that a signal has the correct OFDM structure.

The concept is to utilise the property of the OFDM symbol in that it contains highly correlated and highly uncorrelated portions. In an OFDM symbol the guard interval and the tail end of the symbol will correlate with each other. The rest of the symbol can be considered to be white noise and thus does not correlate.

This invention therefore checks, in a computationally efficient way, with only a small data sample, for correlation in the guard interval and lack of correlation outside the guard interval, which advantageously improves the receiver's immunity to false positives.

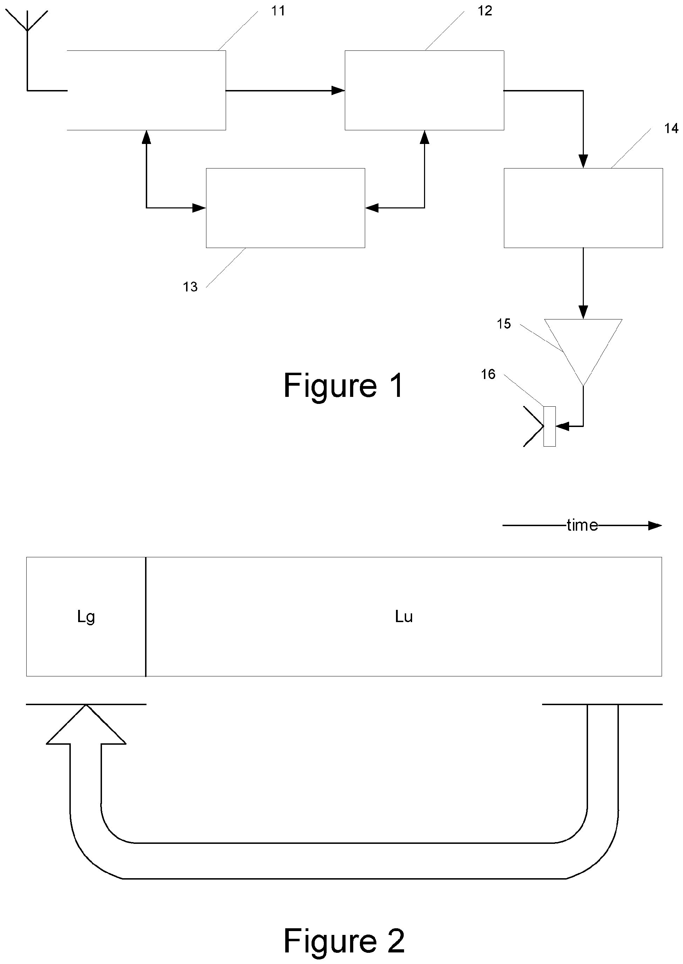

Figure 1 shows a simplified example of an OFDM receiver, for example a DAB radio receiver. A broadcast signal is received by an antenna, which is coupled to a tuner 11. Received signals are passed to a demodulator 12. The tuner 11 and demodulator 12 are controlled by a controller 13. The demodulated signal is then passed to a decoder 14, which decodes data from the OFDM symbol (for example audio), which is then output from the loudspeaker 16 via the power amplifier 15.

Figure 2 shows the basic structure of a broadcast OFDM symbol. The symbol comprises a guard interval or region, which is Lg samples long, and a data region, which is Lu samples long. In OFDM transmission, the guard interval is copy of the latter part of the data region. The guard interval is also known as a cyclic prefix, and advantageously enables receivers to overcome problems associated with received interference.

In the method according to the invention, the receiver captures baseband IQ samples. The number of samples must be equivalent to at least two symbol periods including the guard intervals. This signal will be referred to as x(t). This signal can be captured without any time/frequency or equalisation processing.

Firstly a sliding correlation of the input samples is performed to identify the guard interval. The sliding correlation is performed by comparing a first samples with another sample Lu samples away from the first sample. Since the guard interval (when transmitted) is an exact copy of a portion of the data region, as the guard interval is reached, the receiver should see a peak in the correlation. The peak value is found to locate the guard interval at position $n_0$. This stage provides a guard interval correlation.

Next, the sampled signal is phase corrected (from now on referred to as p(m)).

After phase correction, the sampled signal (p(m)) is then correlated in two regions: (i) the guard region; and (ii) the data region. In preferred embodiments, the correlations are between samples that are Lu samples away (i.e. the number of samples equivalent to the length of a data region of an OFDM symbol). That is, for the guard interval, the samples in the guard interval are being correlated to samples at the end of the data region (which is a copy of the guard interval), and, for the data region, the samples in the data region are being correlated to samples that are equivalent to the position of samples in the data region of a subsequent symbol.

From these two correlations, a first and second metric may be determined, and the receiver can then detect a broadcast OFDM signal based on these metrics. In preferred embodiments, if each of the metrics are below a threshold value, the detector identifies the received signal as being a valid OFDM symbol and thus is able to performs further analysis and/or decoding. If either or both of the metrics are above a threshold value, the detector identifies the received signal as comprising an invalid OFDM symbol and moves to another frequency to scan for further signals.

The method therefore utilises the fact that signals in the guard interval are highly correlated, and the signals in the data region have little or no correlation to signals in the data region of a subsequent OFDM symbol. Advantageously, by using both metrics, this avoids the problem of false positives in methods utilising only the correlation of the guard interval (since most received signals will have some element of correlation at some point).

The generation of the two metrics will now be discussed in more detail.

(i) Guard region

In the guard region the number of phasors which fall on the left hand side of the complex plane are counted (this will be referred to as q).

For an ideal OFDM signal that has been phase corrected, this will be zero as all the correlated samples should lie on the positive real axis.

This is the first metric.

(ii) Data region

Next the angular distribution of an interval outside the guard (i.e. in the data region) is measured.

In an ideal OFDM signal, the angular distribution of the data region of the first and subsequent symbols should be even across all quadrants as they are highly uncorrelated samples. Uncorrelated samples will have an even distribution in the complex plane i.e. there should be Lg/4 samples in each quadrant (Lg has been taken as the number of samples in this example. However, the number of samples could be anywhere between 4 and Lu samples). The deviation (referred to as r) should be zero for an OFDM signal.

The deviation (r) is the second metric.

The two metrics q and r can be examined to determine whether or not the received signal is of a recognised OFDM construction.

If both of the metrics (q and r) are zero then the signal is of OFDM construction.

If either or both of the metrics (q and r) are non zero, a threshold can be set, above which the signal is deemed not to be a OFDM signal.

The above methods can be described mathematically as follows:

$$p(m) = x(m) \cdot \overline{x(m+Lu)} \cdot \sum_{t=n_0}^{n_0+Lg} x(t) \cdot \overline{x(t+Lu)}$$

$$q = \sum_{m=n_0}^{n_0+Lg} \left[ p(m) < 0 \right] = 1$$

$$h(q) = hist(angle(p(m)+\Pi) \cdot 2\Pi),4) \Big|_{m=n_{0+2Lg}}^{n_{0+3Lg}}$$

$$r = \sum_{n=0}^{3} \left| h(n) - \frac{Lg}{4} \right|$$

In DAB mode 1 a symbol is 1.246ms. Since the detector preferably needs at least 2 symbols, so that's ~2.5ms. It is estimated that the controller would take in the order of 0.5ms to perform the above calculations. As such, it is estimated that it may take as little as 3ms to 5ms to determine the presence of an OFDM signal.

Although the present invention has been described hereinabove with reference to specific embodiments, the present invention is not limited to the specific embodiments and modifications will be apparent to a skilled person in the art which lie within the scope of the present invention. Any of the embodiments described hereinabove can be used in any combination.

**Claims**

1. A method of detecting a broadcast OFDM signal, the broadcast OFDM signal comprising a plurality of symbols, each symbol comprising a guard frame comprising a cyclic prefix, and a data portion, the method comprising the steps of:

receiving a plurality of samples from a broadcast receiver, the number of samples corresponding with the length of at least two OFDM symbols; performing a sliding correlation on the received plurality of samples to identify a peak of correlation between the samples, the sliding correlation occurring a number of samples apart corresponding with a number of samples in the data portion of an OFDM symbol; correcting a phase of the received samples using the identified peak in correlation to generate a phase corrected signal; performing a first correlation comprising correlating a plurality of samples from a first region of the phase corrected signal with a plurality of samples in a second region of the phase corrected signal, the first region corresponding with a guard frame of an OFDM symbol, the second region corresponding with a portion of the data portion of an OFDM symbol corresponding with the guard frame; performing a second correlation comprising correlating a plurality of samples from a third region of the phase corrected signal with a plurality of samples in a fourth region of the phase corrected signal, the third region corresponding with a portion of a data portion of an OFDM symbol, and the fourth region corresponding with a portion of a data portion of a subsequent OFDM symbol; detecting a broadcast OFDM signal in the plurality of samples from the broadcast receiver based on the first and second correlations by:

    generating a first metric of the samples comprising the first correlation by counting a number of received correlating samples in the phase corrected signal that lie in the negative complex plane; generating a second metric of the samples comprising the second correlation by measuring the angular distribution of received correlating samples in the phase corrected signal and measuring a deviation of the angular distribution of received correlating samples in the phase corrected signal across all quadrants of a complex plane; and comparing the first and second metrics with a threshold value.

2. A method according to claim 1, wherein the plurality of samples in the first region and plurality of samples in the second region are spaced apart by a number of samples corresponding with the number of samples in the data portion of an OFDM symbol.

3. A method according to claim 1 or 2, wherein the plurality of samples in the third region and plurality of samples in the fourth region are spaced apart by a number of samples corresponding with the number of samples in the data portion of an OFDM symbol.

4. A method according to claim 1, 2 or 3, wherein a broadcast OFDM signal is detected when the first and second metric are below the threshold value.

5. A method according to any preceding claim, wherein a broadcast OFDM signal is detected when the first and second metrics are substantially 0.

6. A method according to any preceding claim, wherein the OFDM symbol comprises a DAB ensemble.

7. A receiver for detecting a broadcast OFDM signal, the broadcast OFDM signal comprising a plurality of symbols, each symbol comprising a guard frame comprising a cyclic prefix, and a data portion, the receiver comprising:

    a tuner coupleable to an antenna for receiving broadcast signals; a demodulator coupled to an output of the tuner for demodulating a received broadcast signal; a sampler for sampling an output of the demodulator; and a processor coupled to an output of the sampler,

wherein the processor is configured to process a number of received samples to detect a broadcast OFDM signal in the received broadcast signal, the number of samples corresponding with the length of at least two OFDM symbols, and wherein the processor is operable to:

    perform a sliding correlation on the received plurality of samples to identify a peak of correlation between the samples, the sliding correlation occurring a number of samples apart corresponding with a number of samples in the data portion of an OFDM symbol; correct a phase of the received samples using the identified peak in correlation to generate a phase corrected signal; perform a first correlation comprising correlating a plurality of samples from a first region of the phase corrected signal with a plurality of samples in a second region of the phase corrected signal, the first region corresponding with a guard frame of an OFDM symbol, the second region corresponding with a portion of the data portion of an OFDM symbol corresponding with the guard frame; perform a second correlation comprising correlating a plurality of samples from a third region of the phase corrected signal with a plurality of samples in a fourth region of the phase corrected signal, the third region corresponding with a portion of a data portion of an OFDM symbol, and the fourth region corresponding with a portion of a data portion of a subsequent OFDM symbol; and

detect a broadcast OFDM signal in the plurality of samples from the broadcast receiver based on the first and second correlations, by:

generating a first metric of the samples comprising the first correlation by counting a number of received correlating samples in the phase corrected signal that lie in the negative complex plane;

generating a second metric of the samples comprising the second correlation by measuring the angular distribution of received correlating samples in the phase corrected signal and measuring a deviation of the angular distribution of received correlating samples in the phase corrected signal across all quadrants of a complex plane; and

comparing the first and second metrics with a threshold value.

8. A receiver according to claim 7, wherein the plurality of samples in the first region and plurality of samples in the second region are spaced apart by a number of samples corresponding with the number of samples in the data portion of an OFDM symbol.

9. A receiver according to claim 7 or 8, wherein the plurality of samples in the third region and plurality of samples in the fourth region are spaced apart by a number of samples corresponding with the number of samples in the data portion of an OFDM symbol.

10. A receiver according to any one of claims 7 to 9, wherein the processor detects a broadcast OFDM signal when the first and second metric are below the threshold value.

11. A receiver according to any one of claims 7 to 10, wherein the processor detects a broadcast OFDM signal when the first and second metrics are substantially 0.

12. A receiver according to any one of claims 7 to 11, wherein the OFDM symbol comprises a DAB ensemble.

**Patentansprüche**

1. Verfahren zum Ermitteln eines OFDM-Rundfunksignals, wobei das OFDM-Rundfunksignal eine Vielzahl von Symbolen umfasst, wobei jedes Symbol einen Schutzrahmen, der einen zyklischen Präfix umfasst, und einen Datenabschnitt umfasst, wobei das Verfahren die folgenden Schritte umfasst:

Empfangen einer Vielzahl von Abtastwerten von einem Rundfunkempfänger, wobei die Anzahl der Abtastwerte der Länge von mindestens zwei OFDM-Symbolen entspricht;

Durchführen einer gleitenden Korrelation auf der empfangenen Vielzahl von Abtastwerten, um einen Spitzenwert der Korrelation zwischen den Abtastwerten zu identifizieren, wobei die gleitende Korrelation im Abstand einer Anzahl von Abtastwerten erfolgt, die einer Anzahl von Abtastwerten im Datenabschnitt eines OFDM-Symbols entspricht;

Korrigieren einer Phase der empfangenen Abtastwerte unter Verwendung des identifizierten Spitzenwerts bei der Korrelation, um ein phasenkorrigiertes Signal zu erzeugen;

Durchführen einer ersten Korrelation, umfassend: Korrelieren einer Vielzahl von Abtastwerten aus einem ersten Bereich des phasenkorrigierten Signals mit einer Vielzahl von Abtastwerten in einem zweiten Bereich des phasenkorrigierten Signals, wobei der erste Bereich einem Schutzrahmen eines OFDM-Symbols entspricht, wobei der zweite Bereich einem Abschnitt des Datenabschnitts eines OFDM-Symbols entspricht, das dem Schutzrahmen entspricht;

Durchführen einer zweiten Korrelation, umfassend: Korrelieren einer Vielzahl von Abtastwerten aus einem dritten Bereich des phasenkorrigierten Signals mit einer Vielzahl von Abtastwerten in einem vierten Bereich des phasenkorrigierten Signals, wobei der dritte Bereich einem Abschnitt eines Datenabschnitts eines OFDM-Symbols entspricht und der vierte Bereich einem Abschnitt eines Datenabschnitts eines nachfolgenden OFDM-Symbols entspricht;

auf der ersten und der zweiten Korrelation beruhendes Ermitteln eines OFDM-Rundfunksignals in der Vielzahl von Abtastwerten vom Rundfunkempfänger durch:

Erzeugen einer ersten Metrik der Abtastwerte, welche die erste Korrelation umfassen, durch Zählen einer Anzahl von empfangenen korrelierenden Abtastwerten im phasenkorrigierten Signal, die in der negativen komplexen Ebene liegen;

Erzeugen einer zweiten Metrik der Abtastwerte, welche die zweite Korrelation umfassen, durch Messen der Winkelverteilung empfangener korrelierender Abtastwerte im phasenkorrigierten Signal und Messen einer Abweichung der Winkelverteilung empfangener korrelierender Abtastwerte im phasenkorrigierten Signal über alle Quadranten einer komplexen Ebene hinweg; und

Vergleichen der ersten und der zweiten Metrik mit einem Schwellenwert.

2. Verfahren nach Anspruch 1, worin die Vielzahl der Abtastwerte im ersten Bereich und die Vielzahl der Abtastwerte im zweiten Bereich um eine Anzahl von Abtastwerten beabstandet sind, die der Anzahl der Abtastwerte im Datenabschnitt eines OFDM-Symbols entspricht.

3. Verfahren nach Anspruch 1 oder 2, worin die Vielzahl der Abtastwerte im dritten Bereich und die Vielzahl der Abtastwerte im vierten Bereich um eine Anzahl von Abtastwerten beabstandet sind, die der Anzahl der Abtastwerte im Datenabschnitt eines OFDM-Symbols entspricht.

4. Verfahren nach Anspruch 1, 2 oder 3, worin ein OFDM-Rundfunksignal ermittelt wird, wenn die erste und die zweite Metrik unterhalb des Schwellenwertwerts liegen.

5. Verfahren nach einem der vorhergehenden Ansprüche, worin ein OFDM-Rundfunksignal ermittelt wird, wenn die erste und die zweite Metrik im Wesentlichen 0 sind.

6. Verfahren nach einem der vorhergehenden Ansprüche, worin das OFDM-Symbol ein DAB-Ensemble umfasst.

7. Empfänger zum Ermitteln eines OFDM-Rundfunksignals, wobei das OFDM-Rundfunksignal eine Vielzahl von Symbolen umfasst, wobei jedes Symbol einen Schutzrahmen, der einen zyklischen Präfix umfasst, und einen Datenabschnitt umfasst, wobei der Empfänger umfasst:

einen Tuner, der mit einer Antenne koppelbar ist, zum Empfangen von Rundfunksignalen;
einen Demodulator, der mit einem Ausgang des Tuners gekoppelt ist, zum Demodulieren eines empfangenen Rundfunksignals;
einen Abtaster zum Abtasten eines Ausgangs des Demodulators; und
einen Prozessor, der mit einem Ausgang des Abtasters gekoppelt ist,
worin der Prozessor dafür konfiguriert ist, eine Anzahl von empfangenen Abtastwerten zu verarbeiten, um ein OFDM-Rundfunksignal im empfangenen Rundfunksignal zu ermitteln, wobei die Anzahl der Abtastwerte der Länge von mindestens zwei OFDM-Symbolen entspricht, und

worin der Prozessor betreibbar dafür ist:

eine gleitende Korrelation auf der empfangenen Vielzahl von Abtastwerten durchzuführen, um eine Spitze der Korrelation zwischen den Abtastwerten zu identifizieren, wobei die gleitende Korrelation im Abstand einer Anzahl von Abtastwerten erfolgt, die einer Anzahl von Abtastwerten im Datenabschnitt eines OFDM-Symbols entspricht;
eine Phase der empfangenen Abtastwerte unter Verwendung des identifizierten Spitzenwerts bei der Korrelation zu korrigieren, um ein phasenkorrigiertes Signal zu erzeugen;
eine erste Korrelation durchzuführen, umfassend: Korrelieren einer Vielzahl von Abtastwerten aus einem ersten Bereich des phasenkorrigierten Signals mit einer Vielzahl von Abtastwerten in einem zweiten Bereich des phasenkorrigierten Signals, wobei der erste Bereich einem Schutzrahmen eines OFDM-Symbols entspricht, wobei der zweite Bereich einem Abschnitt des Datenabschnitts eines OFDM-Symbols entspricht, das dem Schutzrahmen entspricht;
eine zweite Korrelation durchzuführen, umfassend: Korrelieren einer Vielzahl von Abtastwerten aus einem dritten Bereich des phasenkorrigierten Signals mit einer Vielzahl von Abtastwerten in einem vierten Bereich des phasenkorrigierten Signals, wobei der dritte Bereich einem Abschnitt eines Datenabschnitts eines OFDM-Symbols entspricht und der vierte Bereich einem Abschnitt eines Datenabschnitts eines nachfolgenden OFDM-Symbols entspricht; und
auf der Grundlage der ersten und der zweiten Korrelation ein OFDM-Rundfunksignal in der Vielzahl von Abtastwerten vom Rundfunkempfänger zu ermitteln, und zwar durch:

Erzeugen einer ersten Metrik der Abtastwerte, welche die erste Korrelation umfassen, durch Zählen einer Anzahl von empfangenen korrelierenden Abtastwerten im phasenkorrigierten Signal, die in der negativen komplexen Ebene liegen;
Erzeugen einer zweiten Metrik der Abtastwerte, welche die zweite Korrelation umfassen, durch Messen der Winkelverteilung empfangener korrelierender Abtastwerte im phasenkorrigierten Signal und Messen einer Abweichung der Winkelverteilung empfangener korrelierender Abtastwerte im phasenkorrigierten Signal über alle Quadranten einer komplexen Ebene hinweg; und Vergleichen der ersten und der zweiten Metrik mit einem Schwellenwert.

8. Empfänger nach Anspruch 7, worin die Vielzahl der Abtastwerte im ersten Bereich und die Vielzahl der Abtastwerte im zweiten Bereich um eine Anzahl von Abtastwerten beabstandet sind, die der Anzahl der Abtastwerte im Datenabschnitt eines OFDM-Symbols entspricht.

9. Empfänger nach Anspruch 7 oder 8, worin die Vielzahl der Abtastwerte im dritten Bereich und die Vielzahl der Abtastwerte im vierten Bereich um eine Anzahl von Abtastwerten beabstandet sind, die der Anzahl der Abtastwerte im Datenabschnitt eines OFDM-Symbols entspricht.

10. Empfänger nach einem der Ansprüche 7 bis 9, worin der Prozessor ein OFDM-Rundfunksignal erkennt, wenn die erste und die zweite Metrik unterhalb des Schwellenwertwerts liegen.

11. Empfänger nach einem der Ansprüche 7 bis 10, worin der Prozessor ein OFDM-Rundfunksignal erkennt, wenn die erste und die zweite Metrik im Wesentlichen 0 sind.

12. Empfänger nach einem der Ansprüche 7 bis 11, worin das OFDM-Symbol ein DAB-Ensemble umfasst.

**Revendications**

1. Procédé de détection d'un signal OFDM de diffusion, le signal OFDM de diffusion comprenant une pluralité de symboles, chaque symbole comprenant une trame de garde qui comprend un préfixe cyclique, et une partie de données, le procédé comprenant les étapes constituées par :

   la réception d'une pluralité d'échantillons en provenance d'un récepteur de diffusion, le nombre d'échantillons correspondant à la longueur d'au moins deux symboles OFDM ;
   la réalisation d'une corrélation glissante sur la pluralité d'échantillons reçue de manière à identifier une crête de corrélation entre les échantillons, la corrélation glissante étant réalisée sur un nombre d'échantillons espacés en correspondance avec un nombre d'échantillons dans la partie de données d'un symbole OFDM ;
   la correction d'une phase des échantillons reçus en utilisant la crête de corrélation identifiée de manière à générer un signal à phase corrigée ;
   la réalisation d'une première corrélation qui comprend la corrélation d'une pluralité d'échantillons en provenance d'une première région du signal à phase corrigée avec une pluralité d'échantillons en provenance d'une deuxième région du signal à phase corrigée, la première région correspondant à une trame de garde d'un symbole OFDM, la deuxième région correspondant à une partie de la partie de données d'un symbole OFDM qui correspond à la trame de garde ;
la réalisation d'une seconde corrélation qui comprend la corrélation d'une pluralité d'échantillons en provenance d'une troisième région du signal à phase corrigée avec une pluralité d'échantillons en provenance d'une quatrième région du signal à phase corrigée, la troisième région correspondant à une partie d'une partie de données d'un symbole OFDM et la quatrième région correspondant à une partie d'une partie de données d'un symbole OFDM subséquent ;
la détection d'un signal OFDM de diffusion dans la pluralité d'échantillons en provenance du récepteur de diffusion sur la base des première et seconde corrélations en réalisant les actions qui suivent :

   la génération d'une première mesure des échantillons qui comprennent la première corrélation en comptant un nombre d'échantillons de corrélation reçus dans le signal à phase corrigée qui s'étendent dans le plan complexe négatif ;
   la génération d'une seconde mesure des échantillons qui comprennent la seconde corrélation en mesurant la distribution angulaire d'échantillons de corrélation reçus dans le signal à phase corrigée et en mesurant une déviation de la distribution angulaire d'échantillons de corrélation reçus dans le signal à phase corrigée sur tous les quadrants d'un plan complexe ; et
   la comparaison des première et seconde mesures avec une valeur de seuil.

2. Procédé selon la revendication 1, dans lequel les échantillons de la pluralité d'échantillons dans la première région et les échantillons de la pluralité d'échantillons dans la deuxième région sont espacés par un nombre d'échantillons qui correspond au nombre d'échantillons dans la partie de données d'un symbole OFDM.

3. Procédé selon la revendication 1 ou 2, dans lequel les échantillons de la pluralité d'échantillons dans la troisième région et les échantillons de la pluralité d'échantillons dans la quatrième région sont espacés par un nombre d'échantillons qui correspond au nombre d'échantillons dans la partie de données d'un symbole OFDM.

**4.** Procédé selon la revendication 1, 2 ou 3, dans lequel un signal OFDM de diffusion est détecté lorsque les première et seconde mesures sont en deçà de la valeur de seuil.

**5.** Procédé selon l'une quelconque des revendications qui précèdent, dans lequel un signal OFDM diffusé est détecté lorsque les première et seconde mesures sont sensiblement à 0.

**6.** Procédé selon l'une quelconque des revendications qui précèdent, dans lequel le symbole OFDM comprend un ensemble DAB.

**7.** Récepteur pour détecter un signal OFDM de diffusion, le signal OFDM de diffusion comprenant une pluralité de symboles, chaque symbole comprenant une trame de garde qui comprend un préfixe cyclique, et une partie de données, le récepteur comprenant :

un tuner qui peut être couplé à une antenne pour recevoir des signaux de diffusion ;
un démodulateur qui est couplé à une sortie du tuner pour démoduler un signal de diffusion reçu ;
un échantillonneur pour échantillonner une sortie du démodulateur ; et
un processeur qui est couplé à une sortie de l'échantillonneur ;
dans lequel le processeur est configuré de manière à ce qu'il traite un certain nombre d'échantillons reçus de manière à ce qu'il détecte un signal OFDM de diffusion dans le signal de diffusion reçu, le nombre d'échantillons correspondant à la longueur d'au moins deux symboles OFDM ; et
dans lequel le processeur peut être opérationnel de manière à ce qu'il réalise les actions qui suivent :

la réalisation d'une corrélation glissante sur la pluralité d'échantillons reçue de manière à identifier une crête de corrélation entre les échantillons, la corrélation glissante étant réalisée sur un nombre d'échantillons espacés en correspondance avec un nombre d'échantillons dans la partie de données d'un symbole OFDM ;
la correction d'une phase des échantillons reçus en utilisant la crête de corrélation identifiée de manière à générer un signal à phase corrigée ;
la réalisation d'une première corrélation qui comprend la corrélation d'une pluralité d'échantillons en provenance d'une première région du signal à phase corrigée avec une pluralité d'échantillons en provenance d'une deuxième région du signal à phase corrigée, la première région correspondant à une trame de garde d'un symbole OFDM, la deuxième région correspondant à une partie de la partie de données d'un symbole OFDM qui correspond à la trame de garde ;
la réalisation d'une seconde corrélation qui comprend la corrélation d'une pluralité d'échantillons en provenance d'une troisième région du signal à phase corrigée avec une pluralité d'échantillons en provenance d'une quatrième région du signal à phase corrigée, la troisième région correspondant à une partie d'une partie de données d'un symbole OFDM et la quatrième région correspondant à une partie d'une partie de données d'un symbole OFDM subséquent ; et
la détection d'un signal OFDM de diffusion dans la pluralité d'échantillons en provenance du récepteur de diffusion sur la base des première et seconde corrélations en réalisant les actions qui suivent :

la génération d'une première mesure des échantillons qui comprennent la première corrélation en comptant un nombre d'échantillons de corrélation reçus dans le signal à phase corrigée qui s'étendent dans le plan complexe négatif ;
la génération d'une seconde mesure des échantillons qui comprennent la seconde corrélation en mesurant la distribution angulaire d'échantillons de corrélation reçus dans le signal à phase corrigée et en mesurant une déviation de la distribution angulaire d'échantillons de corrélation reçus dans le signal à phase corrigée sur tous les quadrants d'un plan complexe ; et
la comparaison des première et seconde mesures avec une valeur de seuil.

**8.** Récepteur selon la revendication 7, dans lequel les échantillons de la pluralité d'échantillons dans la première région et les échantillons de la pluralité d'échantillons dans la deuxième région sont espacés par un nombre d'échantillons qui correspond au nombre d'échantillons dans la partie de données d'un symbole OFDM.

**9.** Récepteur selon la revendication 7 ou 8, dans lequel les échantillons de la pluralité d'échantillons dans la troisième région et les échantillons de la pluralité d'échantillons dans la quatrième région sont espacés par un nombre d'échantillons qui correspond au nombre d'échantillons dans la partie de données d'un symbole OFDM.

10. Récepteur selon l'une quelconque des revendications 7 à 9, dans lequel le processeur détecte un signal OFDM de diffusion lorsque les première et seconde mesures sont en deçà de la valeur de seuil.

11. Récepteur selon l'une quelconque des revendications 7 à 10, dans lequel le processeur détecte un signal OFDM de diffusion lorsque les première et seconde mesures sont sensiblement à 0.

12. Récepteur selon l'une quelconque des revendications 7 à 11, dans lequel le symbole OFDM comprend un ensemble DAB.

Figure 1

Figure 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CHAUDHARI S et al.** Autocorrelation-Based Decentralized Sequential Detection of OFDM Signals in Cognitive Radios. *IEEE TRANSACTIONS ON SIGNAL PROCESSING,* 01 July 2009, vol. 57 (7), 2690-2700

- **ERIK AXELL et al.** Optimal and near-optimal spectrum sensing of OFDM signals in AWGN channels. *2ND INTERNATIONAL WORKSHOP ON COGNITIVE INFORMATION PROCESSING (CIP),* 14 June 2010, 128-133